Europäisches Patentamt

**European Patent Office**

Office européen des brevets

(19)

(11) Veröffentlichungsnummer : **0 025 407**
**B1**

(12) **EUROPÄISCHE PATENTSCHRIFT**

(45) Veröffentlichungstag der Patentschrift :
**11.05.83**

(21) Anmeldenummer : **80630039.8**

(22) Anmeldetag : **05.09.80**

(51) Int. Cl.³ : **E 02 F  5/10, E 02 F  5/06,**
**E 01 C  11/26, H 02 G  1/08**

(54) **Verfahren zum nachträglichen Verlegen von Kabeln und Rohren unter Startbahnen, Wegstrecken u. dgl.**

(30) Priorität : **05.09.79 LU 81655**

(43) Veröffentlichungstag der Anmeldung :
**18.03.81 Patentblatt 81/11**

(45) Bekanntmachung des Hinweises auf die Patenter-teilung : **11.05.83 Patentblatt 83/19**

(84) Benannte Vertragsstaaten :
**DE GB NL**

(56) Entgegenhaltungen :
**DE A 1 515 956**
**DE A 2 206 679**
**DE A 2 353 278**
**DE C 132 643**
**DE C 640 264**
**DE C 961 609**
**FR A 2 121 878**
**GB A 900 822**
**US A 3 452 545**

(73) Patentinhaber : **REINDEER N.V.**
**John B. Corsiraweg 6**
**Willemstad Curaçao, Niederländische Antillen (NL)**

(72) Erfinder : **Lestraden, Jakobus W.**
**Nachtegaall 4**
**Sassenheim (NL)**

(74) Vertreter : **Noz, Franciscus Xaverius, Ir.**
**Algemeen Octrooibureau P.O. Box 645**
**NL-5600 AP Eindhoven (NL)**

EP 0 025 407 B1

Verfahren Zum Nachträglichen Verlegen von Kabeln und Rohren unter Startbahnen, Wegstrecken u. dgl.

Die Erfindung bezieht sich auf ein Verfahren zum nachträglichen Verlegen von Kabeln und von mehr oder weniger flexiblen Rohren ins Erdreich und speziell unter verfesstigte Oberflächen, wie z. B. Startbahnen für Flugzeuge, Wegstrecken usw.

Verschiedenartige Vorrichtungen zum Verlegen von Kabeln und flexiblen Rohren sind allgemein bekannt. Hierbei handelt es sich oft um Traktoren, welche mit einem pflugförmigen Werkzeug versehen sind und womit in einem kontinuierlichen Prozess ein Graben ausgehoben wird. Das Kabel oder Heizrohr wird anschliessend in den Graben eingezogen und mit Erdmasse bedeckt. Auch ist es möglich, das Pflugorgan unterhalb der Erdoberfläche fortzubewegen, wobei das Kabel oder Rohr gleichzeitig durch das Pflugorgan in den Boden eingezogen wird, so dass alle Arbeitsgänge zusammenfallen.

Ist es jedoch notwendig, ein Kabel oder ein Rohr unter einer festen Bodenbedeckungsschicht zu verlegen, so versagen diese oder ähnliche Verfahren. Man ist gezwungen, die Bedeckungsschicht aufzubrechen, um das Kabel oder Rohr zu verlegen ; abschliessend muss die beschädigte Wegschicht wiederhergestellt werden.

Bemerkt wird, dass aus der Deutschen Patentschrift 640.264 eine Vorrichtung bekannt ist zum Herstellen von waagerechten Schlitzen für Dichtungsschichten im Untergrund von Strassendecken. Diese Maschine weist zwei antreibbare, senkrechte Wellen auf, um die ein Trägerband geführt worden ist. Zur Herstellung der Schlitze unter der Strassendecke ist es erforderlich, beiderseits der Strassendecke einen Graben auszuheben zur Aufnahme der senkrechten Wellen. Abgesehen von dem komplizierten Aufbau dieser bekannten Vorrichtung und der nachteiligen, starken Abnutzung des in Betrieb umlaufenden Fräserbandes erfordert hier auch das Ausheben des Grabens viel kostspielege Arbeitszeit.

Weiter ist aus der Amerikanischen Patentschrift 3.452.545 ein Verfahren zu entnehmen, um Leitungen unterhalb der Erdoberfläche anzubringen. Dazu werden zwei Löcher in den Boden gegraben und mit einer Bohranlage eine waagerechte Bohrung zwischen beiden Löchern hergestellt. Daraufhin können die Leitungen oder dergleichen durch die Bohrung gezogen werden. Auch dieses bekannte Verfahren erfordert die Benutzung von komplizierten Bohranlagen und zeitraubende Grabearbeiten zur Herstellung der Löcher zur Aufnahme der Bohranlage und dergleichen.

In der Deutschen Offenlegungsschrift 1.515.956 ist ein Verfahren zum Verlegen von Kabeln beschrieben. Dabei wird das Kabel durch unter der Bodenoberfläche liegende Kanäle gezogen. Entsprechend diesem Verfahren ist es also erforderlich vor dem Verlegen von Kabeln zuerst Kanäle in den Boden zu graben, wozu es erforderlich ist, eine eventuell vorhandene Bedeckungsschicht aufzubrechen.

In der Praxis hat sich herausgestellt, dass es z. B. bei Startbahnen für Flugzeuge oft notwendig ist, nachträglich Kabel und Rohr unter der Bahn zu verlegen. Hierbei handelt es sich in vielen Fällen um Heizanlagen, welche die Bildung von Glatteis verhindern oder eine Schneeschicht zum Schmelzen bringen sollen.

Aufgabe der Erfindung ist es, ein Verfahren zu entwickeln welches es ermöglicht, unter Startbahnen u. dgl. nachträglich Kabel und Rohre auf wirtschaftliche Weise zu Verlegen, ohne dabei den bestehenden Belag zu beschädigen.

Dies wird gemäss der Erfindung dadurch erreicht, dass am Ende einer entsprechenden Bahn z. B. zwei Traktoren bzw. Arbeitsmachinen links und rechts der Bahn aufgestellt werden. Zwischen den beiden Traktoren wird ein Stahlseil befestigt und noch ausserhalb des festen Bahnbelags in einen Graben auf die gewünschte Tiefe in das Erdreich gelegt. Alsdann bewegen sich die Traktoren parallel zur Bahn und auf diese Weise wird das Drahtseil unter die Deckschicht gezogen. Die Tiefe, in welcher sich das Drahtseil bewegen soll, welche mit der Tiefe übereinstimmt in der das Kabel oder das Rohr verlegt werden soll, ist abhängig von der Tiefe des Grabens am Ende der Bahn, sowie von der Länge bzw. der Spannung des Drahtseiles.

Haben die beiden Traktoren eine Wegstrecke zurückgelegt, welche dem Abstand der einzelnen Heizkabel oder Rohre untereinander entspricht, so wird mit Hilfe des Drahtseiles das Kabel oder Rohr unter die Startbahn gezogen. Diese beiden Arbeitsgänge werden so oft wiederholt, bis alle Rohre oder Kabel verlegt sind.

In einer bevorzugten Ausführungsart der Erfindung wird das Drahtseil nicht unmittelbar an den Traktoren selbst befestigt, sondern jeweils an einem Pfluge, womit jeder Traktor versehen ist. Dabei ist die Möglichkeit gegeben, die Pflüge auf die gewünschte Tiefe in die Erde zu senken. Das an den Pflügen befestigte Drahtseil kann auf diese Weise in einer vorher bestimmten und gleichbleibenden Tiefe unter der Startbahn hindurch gezogen werden. Diese Tiefe entspricht natürlich derjenigen, in welcher später die Heizkabel oder Heizrohre sich befinden sollen.

Ausserdem ist es möglich, das Drahtseil als Schneidkabel auszubilden und hin- und her zu bewegen, um auf diese Weise das Eindringen in den Boden zu erleichtern. In diesem Falle sind Antriebsmittel für das Schneidkabel vorgesehen, das jeweils über eine Umlenkrolle, welche am Traktor oder Pfluge befestigt ist, läuft. Ein endloses Schneidkabel eignet sich besonders gut, um anschliessend das Heizrohr oder Kabel unter die Startbahn zu ziehen.

**Ansprüche**

1. Verfahren zum nachträglichen Verlegen von Kabeln und Rohren unter Startbahnen, Wegstrecken u. dgl., dadurch gekennzeichnet, dass quer zur Bahn an deren Ende ein Stahlseil in der gewünschten Tiefe unter der Bahn in den Boden gelegt wird, dass die beiden Enden des Stahlseiles beidseitig der Bahn gleichzeitig in Längsrichtung der Bahn fortbewegt werden, wodurch das quer zur Bahn verlaufende Stahlseil unter derselben in deren Längsrichtung hindurch bewegt wird, und dass in gewünschten Abständen in Längsrichtung mittels des Stahlseiles Rohre oder Kabel in Querrichtung zur Bahn unter derselben hindurch in das Erdreich eingezogen werden.

2. Verfahren nach Anspruch 1, dadurch gekennzeichnet, dass ein als Schneidkabel ausgebildetes Seil unter der Bahn in der gewünschten Tiefe quer zur Bahn hin und herbewegt wird.

3. Verfahren nach Anspruch 1 oder 2, gekennzeichnet durch die Verwendung zweier Traktoren oder Arbeitsmaschinen, wovon je eine an jeder Seite der Bahn angeordnet ist und durch ein zwischen den Traktoren ausgelegtes, mit je einem Ende an einen der Traktoren befestigtes Stahlseil.

4. Verfahren nach Anspruch 3, gekennzeichnet durch je einen an den Traktoren festgemachten, in der Höhe feststellbaren Pflug an denen das Seil festgemacht ist.

5. Verfahren nach einem der Ansprüche 3 oder 4, dadurch gekennzeichnet, dass das Stahlseil ein endloses Seil ist, dass an jedem Traktor eine Umlenkrolle für das Seil vorgesehen ist und dass Antriebsmittel für das Stahlseil vorgesehen sind.

## Claims

1. A method of afterwards arranging cables and pipes below runways, road tracks and the like characterized in that transversely of the track, at the end thereof, a steel rope is inserted to the desired depth below the track into the ground, in that the two ends of the steel rope on both sides of the track are simultaneously moved on in the longitudinal direction of the track, so that the steel rope extending transversely of the track is moved below the same in its direction of length and in that at desired intervals in the direction of length pipes or cables are drawn by means of the steel rope transversely of the track below the same into the ground.

2. A method as claimed in Claim 1, characterized in that a rope designed in the form of a cutting cable is moved to and fro below the track at the desired depth in a direction transverse of the track.

3. A method as claimed in Claim 1 or 2, characterized by the use of two tractors or work machines of which there has been provided one on each side of the track and by a steel rope arranged between the tractors and connected at each end to one of the tractors.

4. A method as claimed in Claim 3, characterized by a plough hitched to each one of the tractors and being adjustable in a direction of height, to which ploughs the rope is fastened.

5. A method as claimed in anyone of the Claims 3 or 4, characterized in that the steel rope is and endless rope, in that each tractor is provided with a reversing roller for the rope and in that driving means for the steel rope are provided.

## Revendications

1. Procédé d'aménager ensuite des câbles et des tuyaux au-dessous de pistes d'envol, de sections de route et analogues caractérisé en ce que transversalement à la piste, à l'extrémité, une corde d'acier est déposée à la profondeur désirée au-dessous de la piste dans le sol, que les deux extrémités de la corde d'acier des deux côtés de la piste sont propagées simultanément dans le sens de la longueur de la piste de sorte que la corde d'acier s'étendant transversalement à la piste est avancée au-dessous de la piste dans son sens de la longueur et qu'à des intervalles désirés dans le sens de la longueur tuyaux ou câbles sont tirés au moyen de la corde d'acier transversalement à la piste au-dessous de celle-ci dans le sol.

2. Procédé selon la revendication 1 caractérisé en ce qu'une corde constituée par un câble de coupe est passée en va-et-vient au-dessous de la piste à la profondeur désirée transversalement à la piste.

3. Procédé selon la revendication 1 où 2 caractérisé par l'emploi de deux tracteurs ou machines de traction, dont chacun est installé à un côté de la piste et par une corde d'acier, dont chaque extrémité est fixée à un tracteur.

4. Procédé selon la revendication 3 caractérisé par une charrue attachée à chaque tracteur et étant ajustable en haut, la corde étant fixée aux charrues.

5. Procédé selon la revendication 3 ou 4 caractérisé en ce que la corde d'acier est une corde sans fin, que chaque tracteur est muni d'un rouleau renversant pour la corde et qu'on a prévu des moyens d'entraînement pour la corde d'acier.